(19) Europäisches Patentamt
European Patent Office
Office européen des brevets

(11) **EP 4 557 261 A1**

(12) **EUROPEAN PATENT APPLICATION**

(43) Date of publication:
21.05.2025 Bulletin 2025/21

(21) Application number: 24210595.5

(22) Date of filing: 04.11.2024

(51) International Patent Classification (IPC):
G08G 5/21 (2025.01)        G06N 3/08 (2023.01)
G08G 5/32 (2025.01)        G08G 5/53 (2025.01)
G08G 5/55 (2025.01)        G08G 5/76 (2025.01)

(52) Cooperative Patent Classification (CPC):
G08G 5/21; G06N 3/08; G08G 5/32; G08G 5/53;
G08G 5/55; G08G 5/76

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.11.2023 US 202363600986 P
22.05.2024 US 202418671637

(71) Applicant: **The Boeing Company**
**Arlington, VA 22202 (US)**

(72) Inventor: **Ayhan, Samet**
**Arlington, 22202 (US)**

(74) Representative: **Witte, Weller & Partner**
**Patentanwälte mbB**
**Postfach 10 54 62**
**70047 Stuttgart (DE)**

(54) **METHODS FOR SELECTING AIRCRAFT CRUISE PHASE ROUTES**

(57) A method for selecting a cruise phase route for an aircraft is presented. The method comprises receiving sequences of multivariate flight data from at least one prior flight and receiving a set of candidate cruise phase routes. Upcoming atmospheric conditions including at least upcoming tail winds are received for each of the set of candidate cruise phase routes. For each candidate cruise phase route, a sequence of fuel burn quantities is predicted based on the sequences of multivariate flight data and the upcoming atmospheric data. The fuel burn quantities are summed over the candidate cruise phase route to obtain an estimated fuel burn. A preferred candidate cruise phase route having a lowest estimated fuel burn is indicated.

FIG. 8

**Description**

FIELD

This disclosure relates generally to commercial aviation and more particularly to predicting the fuel consumption and carbon dioxide emissions of an aircraft based on the wind-preferredness of a candidate route.

BACKGROUND

As efforts to combat global warming and climate change become priorities for public and private enterprise alike, it has become increasingly important to monitor and record carbon dioxide emissions to the atmosphere. A major contributor to atmospheric carbon dioxide emissions is air transportation. As such, both governments and the air travel industry place increased focus on monitoring the carbon footprints of air transportation, implementing emissions targets and mitigation measures.

SUMMARY

A method for selecting a cruise phase route for an aircraft is presented. The method comprises receiving sequences of multivariate flight data from at least one prior flight and receiving a set of candidate cruise phase routes. Upcoming atmospheric conditions including at least upcoming tail winds are received for each of the set of candidate cruise phase routes. For each candidate cruise phase route, a sequence of fuel burn quantities is predicted based on the sequences of multivariate flight data and the upcoming atmospheric data. The fuel burn quantities are summed over the candidate cruise phase route to obtain an estimated fuel burn. A preferred candidate cruise phase route having a lowest estimated fuel burn is indicated.

This Summary is provided in order to introduce in simplified form a selection of concepts that are further described in the Detailed Description. This Summary is not intended to identify key features or essential features of the claimed subject matter, nor is it intended to be used to limit the scope of the claimed subject matter. The claimed subject matter is not limited to implementations that solve any disadvantages noted in any part of this disclosure.

BRIEF DESCRIPTION OF THE DRAWINGS

FIG. 1 schematically shows the climb, cruise, and descent phases of an example flight.
FIG. 2 shows a map of example cruise tracks between New York and London.
FIG. 3 is an example plot of delta-tailwind versus delta fuel flow.
FIG. 4 schematically shows an example machine learning pipeline.
FIG. 5 shows aspects of an example machine trainable to make fuel burn and emissions predictions for aircraft flight.
FIG. 6 shows aspects of an example machine trained to make fuel burn and emissions predictions for aircraft flight.
FIG. 7 shows a flow diagram for an example method of training a machine to predict fuel burn for an aircraft over a cruise phase of a flight.
FIG. 8 shows a flow diagram for an example method of selecting a cruise phase route for an aircraft.
FIG. 9 schematically shows aspects of an example computing system.

DETAILED DESCRIPTION

The operating cost of an aircraft correlates directly to the quantity of fuel it consumes. In the aviation industry that quantity is called 'fuel bum'. Fuel burn also correlates directly to emissions of carbon dioxide, nitrogen oxides, ozone, and acoustic noise from an aircraft, all of which have adverse impacts on climate and health. Thus, economic and environmental factors provide, in parallel, strong motivation to limit fuel burn in commercial aviation.

Meeting that objective systematically requires the ability to predict and reduce fuel burn on a flight-by-flight basis. A major mitigation measure is to utilize various operational efficiency solutions such as choosing wind-preferred routes over non-wind-preferred routes to reduce carbon emissions. Although the qualitative value of routes with tail winds versus routes with head winds is well-known, their impact on carbon emissions has not been quantified, making it difficult for airlines to calculate the amount of carbon emissions a flight is expected to produce when it selects a wind-preferred route over a non-wind-preferred route. This makes it difficult for airlines to optimize their routes, particularly for trans-oceanic flights, based on minimizing carbon emissions or fuel burn according to the degree of wind-preferredness.

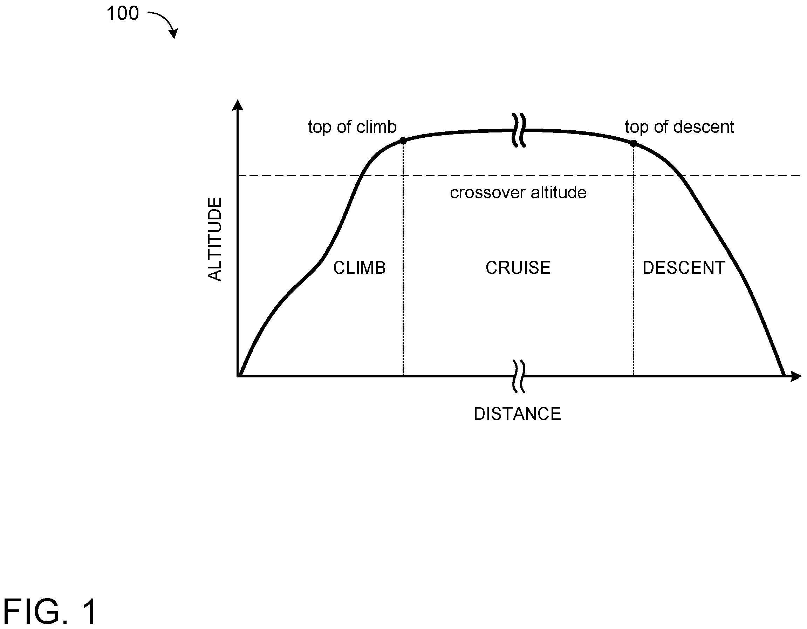

Each flight profile can be divided into a climb phase, a cruise phase, and a descent phase, as represented at 100 in FIG. 1. The climb phase extends from takeoff from the departure airport to the top-of-climb, where the cruise phase begins. The cruise phase is typically marked by long periods of level altitude above the crossover altitude (wherein the indicated airspeed becomes a Mach number). The descent phase extends from the end of the cruise phase (top of descent) to touchdown and landing.

Airspace operational efficiency operates with an established set of parameters that give an advantage to selecting one type of flight path over another. Herein, the cruise phase of the flight, where the aircraft levels off and then goes at generally the same altitude (e.g., barring convective weather) is analyzed. In general, the aircraft will try to reach the highest feasible altitude, where the least amount of fuel is burned based on temperature, pressure, and other factors.

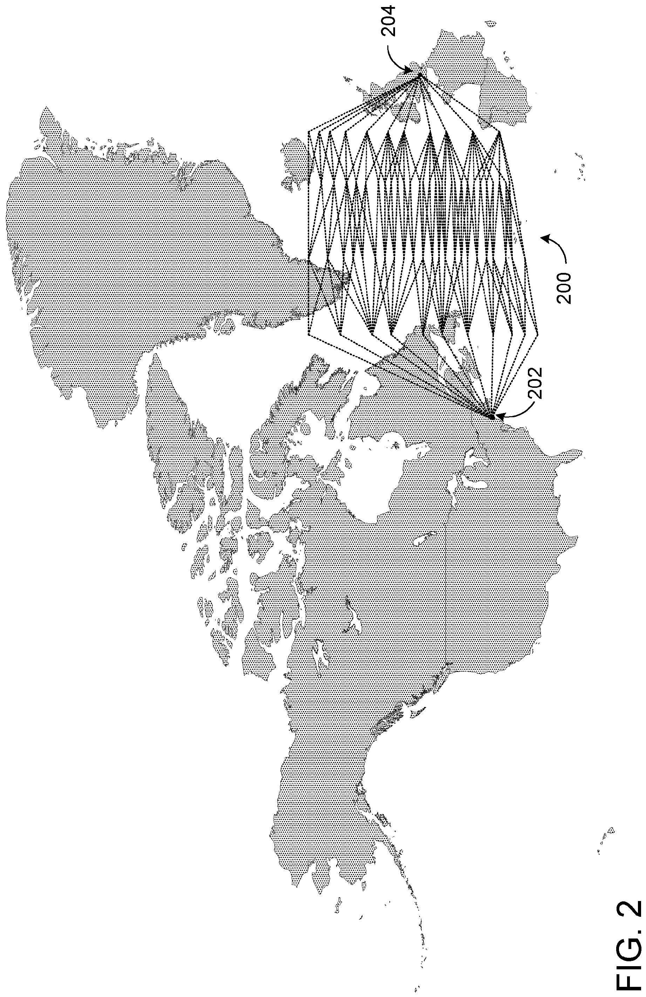

The greatest amount of emissions is produced during trans-oceanic flights. A flight route may be segmented along a series of tracks. For trans-oceanic flights, these tracks are more limited than for domestic flights. FIG. 2 shows an example route map 200 between New York 202 and London 204. There are many potential transitions between tracks at the beginnings and endings of track segments. Based on wind-preferredness, routes may be selected which reduce the amount of emissions or fuel burn. In many circumstances, this will involve selecting a route across a set of tracks at takeoff. However, changes in atmospheric conditions may also allow for transitions between tracks to be selected during a flight, as may changes in flight plans. Given many options, the disclosed methodology aims to determine, based on the constraints and circumstances for a flight, which route has the highest degree of wind-preferredness and/or weather preferredness, and thus the lowest rate of emissions and fuel burn. Such determinations may be performed during a flight, allowing for the advantageous dynamic selection of track segments.

It is well-known that if there is a greater tailwind than a headwind, fuel efficiency is improved. The methodology herein quantifies the impact of wind-preferred routes on emissions, computes the emissions produced by wind-preferred routes versus non-wind-preferred routes and compares them. Initially, a category of "wind-preferred routes" may be defined. Using the true heading of aircraft, wind magnitude and direction, tailwind can be computed over time (throughout a cruise phase of a flight) and averaged. In addition, the average outside temperature during cruise is calculated. Using continuous parameter logging (CPL) data, a more practical approach may be to simply determine tailwind as equal to (groundspeed - airspeed).

Using parameter combinations, a spectrum of tailwinds may be created. Flights with high tailwind and low temperature may be labeled as weather-preferred routes. In some examples, cruise altitude may be used in addition to or as an alternative to temperature, as higher altitude trends with lower temperature. Cruise altitude is representative of temperature, but not prone to temporal climate/weather changes (e.g., temperatures may be lower for winter flights).

In a preliminary example, given the categories of average tailwinds, two subsets of flights were compared based on the combination of their average tailwind, flight level (e.g., top of climb) and weight. Tail numbers and route directions were disregarded, though it is known that East-West flights (i.e., London to New York) have zero or negative tailwinds, while West-East flights (i.e., New York to London) have positive average tailwinds.

To evaluate the impact of wind on emissions/fuel burn, discretized categories or buckets were created for each parameter. For example, parameters for cruise level were set at 38K ft, 39k ft, 40k ft, etc. Parameters for weight were set at 400k lbs., 410k lbs., 420k, lbs., etc. Using these categories, two sets of data were created, where both sets have the same cruise level and weight but differing tailwinds. Fuel flow amounts for the two sets were compared, yielding data indicative of wind's impact on emissions. Further, differences in lateral cruise distance were accounted for by padding the shorter flights.

Table 1 indicates some results of this analysis. Clustering flight data in this way can aid in identifying the degree of wind preferredness in each flight, as "wind-preferred route" is more of a spectrum of flight profiles rather than a binary selection. Here, tailwind discretization is applied by 10 knot steps, -50 -40 -30 -20 up to +80. This allows for results with high granularity in terms of how much fuel is burned or how many emissions are produced based on tail wind and temperature, thus defining wind-preferred routes.

Table 1

| Route #1 | Route #2 | ToC, weight | Tailwind #1 | Tailwind #2 | Delta Tailwind | Saving w/Delta Distance | Avg. Saving w/Delta Distance | Saving w/o Delta Distance |
|---|---|---|---|---|---|---|---|---|
| EGKK-KJFK | EGKK-KJFK | 38K, 440K | 0 | -10 | 10 | 0.019 | 0.0204 | 0.016 |
| EGKK-KJFK | EGKK-KJFK | 38K, 440K | -10 | -20 | 10 | 0.021 | 0.0204 | 0.015 |
| EGKK-KJFK | EGKK-KJFK | 38K, 440K | -20 | -30 | 10 | 0.025 | 0.0204 | 0.023 |

(continued)

| Route #1 | Route #2 | ToC, weight | Tailwind #1 | Tailwind #2 | Delta Tailwind | Saving w/Delta Distance | Avg. Saving w/Delta Distance | Saving w/o Delta Distance |
|---|---|---|---|---|---|---|---|---|
| EGKK-KJFK | EGKK-KJFK | 36K, 450K | -10 | -20 | 10 | 0.023 | 0.0204 | 0.034 |
| EGKK-KJFK | EGKK-KJFK | 36K, 450K | -20 | -30 | 10 | 0.006 | 0.0204 | 0.013 |
| EGKK-KJFK | EGKK-KJFK | 36K, 450K | -30 | -40 | 10 | 0.029 | 0.0204 | 0.016 |
| EGKK-KJFK | EGKK-KJFK | 36K, 450K | -40 | -50 | 10 | 0.02 | 0.0204 | 0.033 |
| EGKK-KJFK | EGKK-KJFK | 38K, 440K | 0 | -20 | 20 | 0.039 | 0.0343 | 0.031 |
| EGKK-KJFK | EGKK-KJFK | 38K, 440K | -10 | -20 | 20 | 0.045 | 0.0343 | 0.037 |
| EGKK-KJFK | EGKK-KJFK | 38K, 440K | -20 | -20 | 20 | 0.01 | 0.0343 | 0.018 |
| EGKK-KJFK | EGKK-KJFK | 36K, 450K | -10 | -30 | 20 | 0.028 | 0.0343 | 0.045 |
| EGKK-KJFK | EGKK-KJFK | 36K, 450K | -20 | -40 | 20 | 0.033 | 0.0343 | 0.027 |
| EGKK-KJFK | EGKK-KJFK | 36K, 450K | -30 | -50 | 20 | 0.047 | 0.0343 | 0.049 |
| EGKK-KJFK | EGKK-KJFK | 36K, 450K | -40 | -60 | 20 | 0.038 | 0.0343 | 0.044 |
| EGKK-KJFK | EGKK-KJFK | 38K, 440K | 0 | -30 | 30 | 0.06 | 0.058 | 0.053 |
| EGKK-KJFK | EGKK-KJFK | 38K, 440K | -10 | -40 | 30 | 0.059 | 0.058 | 0.061 |
| EGKK-KJFK | EGKK-KJFK | 38K, 440K | -20 | -50 | 30 | 0.058 | 0.058 | 0.05 |
| EGKK-KJFK | EGKK-KJFK | 36K, 450K | -10 | -40 | 30 | 0.055 | 0.058 | 0.06 |
| EGKK-KJFK | EGKK-KJFK | 36K, 450K | -20 | -50 | 30 | 0.053 | 0.058 | 0.059 |
| EGKK-KJFK | EGKK-KJFK | 36K, 450K | -30 | -60 | 30 | 0.063 | 0.058 | 0.06 |
| EGKK-KJFK | EGKK-KJFK | 38K, 440K | 0 | -40 | 40 | 0.077 | 0.0736 | 0.076 |
| EGKK-KJFK | EGKK-KJFK | 38K, 440K | -10 | -50 | 40 | 0.077 | 0.0736 | 0.064 |
| EGKK-KJFK | EGKK-KJFK | 38K, 440K | -20 | -60 | 40 | 0.071 | 0.0736 | 0.071 |
| EGKK-KJFK | EGKK-KJFK | 36K, 450K | -10 | -50 | 40 | 0.074 | 0.0736 | 0.092 |
| EGKK-KJFK | EGKK-KJFK | 36K, 450K | -20 | -60 | 40 | 0.069 | 0.0736 | 0.07 |

(continued)

| Route #1 | Route #2 | ToC, weight | Tailwind #1 | Tailwind #2 | Delta Tailwind | Saving w/Delta Distance | Avg. Saving w/Delta Distance | Saving w/o Delta Distance |
|---|---|---|---|---|---|---|---|---|
| EGKK-KJFK | EGKK-KJFK | 38K, 440K | 0 | -50 | 50 | 0.095 | 0.095 | 0.079 |
| EGKK-KJFK | EGKK-KJFK | 38K, 440K | -10 | -60 | 50 | 0.088 | 0.095 | 0.085 |
| EGKK-KJFK | EGKK-KJFK | 38K, 440K | -20 | -70 | 50 | 0.105 | 0.095 | 0.131 |
| EGKK-KJFK | EGKK-KJFK | 36K, 450K | -10 | -60 | 50 | 0.092 | 0.095 | 0.1 |
| EGKK-KJFK | EGKK-KJFK | 38K, 440K | 0 | -60 | 60 | 0.108 | 0.1155 | 0.1 |
| EGKK-KJFK | EGKK-KJFK | 38K, 440K | -10 | -70 | 60 | 0.123 | 0.1155 | 0.144 |
| EGKK-KJFK | EGKK-KJFK | 38K, 440K | 0 | -70 | 70 | 0.141 | 0.141 | 0.157 |
| EGKK-KJFK | KJFK-EGKK | 38K, 420K | -10 | 80 | 90 | 0.15 | 0.15 | 0.144 |
| EGKK-KJFK | KJFK-EGKK | 38K, 420K | -20 | 80 | 100 | 0.17 | 0.1755 | 0.178 |
| EGKK-KJFK | KJFK-EGKK | 38K, 410K | -50 | 50 | 100 | 0.181 | 0.1755 | 0.173 |
| EGKK-KJFK | KJFK-EGKK | 38K, 410K | -60 | 50 | 110 | 0.192 | 0.192 | 0.2 |
| EGKK-KJFK | KJFK-EGKK | 38K, 420K | -40 | 80 | 120 | 0.2 | 0.2 | 0.197 |
| EGKK-KJFK | KJFK-EGKK | 38K, 420K | -50 | 80 | 130 | 0.21 | 0.201 | 0.227 |

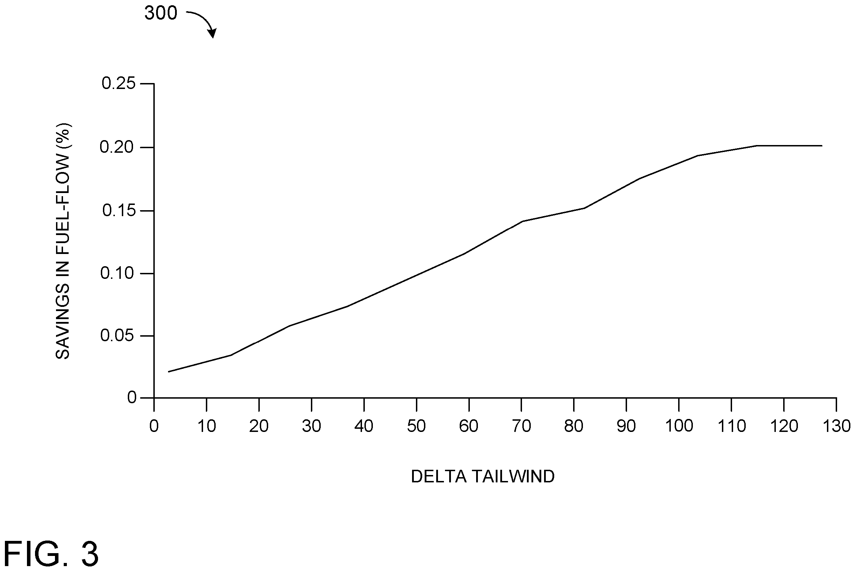

From this data categorization, a change in tailwind can be plotted against a savings in fuel flow, as shown at 300 in FIG. 3. Notably, there is an approximately linear correlation between delta tailwind vs delta fuel flow (%), e.g., the larger the difference in tailwinds, the larger the difference in fuel burn (%). The difference doesn't seem to be impacted by the route, whether analyzing the same route or opposite routes. Overall, there is a rough correlation where 10 knots of tailwind correspond to ~2% reduction in fuel burn, and thus a corresponding savings in emissions.

The impact of wind-preferred routes on carbon emissions has never been quantified before. Overall, the current methodology can be extremely valuable to the aviation industry worldwide, by which they can calculate an aggregated amount of carbon emissions, flights produce worldwide under various conditions i.e., wind-preferred routes vs non-wind-preferred routes to monitor and achieve their net-zero carbon emissions goal by 2050.

To address these issues and provide further advantages, this disclosure presents a deep-learning, data-driven, stochastic tool for aircraft fuel burn prediction on a flight-by-flight basis. The fuel burn prediction is defined as a sequence-learning problem, where it is assumed that fuel burn can be described as a function of time-resolved flight-data recorder (FDR) and atmospheric data. Given a set of prior flights of varying lengths, with such data provided, the trained model predicts fuel burn at every time step along a planned flight. In some examples the model employs an encoder-decoder (E-D) long short-term memory (LSTM) architecture.

Given a set of prior flights with associated FDR and atmospheric data, the training objective is to train a model that predicts fuel burn for another flight before it departs. To address this problem, a flight is defined as a sequence of sensor readings at a particular frequency. A 'sequence' is a set of values in a specified order; herein the values are ordered according to ascending or descending time. In some examples the time step between adjacent values in a sequence is fixed. This type of sequence can also be called a 'time series'. If the flight time is 8 hours and the frequency of the sensor readings is 1Hz, then, for all sensors the flight is defined by 28800 time steps, with one reading recorded for each sensor at each time step. Due to the observed variation in flight time, even between fixed departure and arrival airports, the historical FDR data has varying length for each flight and flight phase. Accordingly, the models here disclosed must address a multivariate, multi-step sequence prediction problem for the climb, cruise, and descent phases of a flight. To that end, the sequence of flight phases in varying lengths is adjusted, for each route, into a sequence of flight phases in fixed length. This may be achieved by padding the shorter sequences.

Once the model is trained and validated against other competing models, it may be used to predict fuel burn for cruise phases of flight based on wind-preferredness and/or weather preferredness.

The disclosed methodology provides a quantitative value of savings in fuel burn and CO2 emissions if a flight utilizes a wind-preferred route versus a non-wind-preferred route. The disclosed methodology also uses Machine Learning techniques to formulate the amount of savings in carbon emissions and fuel burn for each flight based on various meteorological parameters that define the wind-preferredness of the route, which include tailwind/headwind and temperature.

To deliver these capabilities, the disclosed methodology uses CPL data and categorizes flights based on their origin-destination pair, aircraft type and operator (airline). Next, flights in each category are split into three phases (climb, cruise, and descent) based on their labels in the CPL data. Using only cruise phase, flights are further split into sub-categories based on their tailwind values, which is calculated using various parameters in CPL data.

To determine what constitutes a wind-preferred route, the disclosed methodology uses true heading of aircraft and wind magnitude and direction to compute tailwind over time throughout the cruise phase of a flight, and then averages them. In addition, the disclosed methodology computes the average outside temperature during cruise. Using these combinations, the disclosed methodology creates a spectrum, i.e., discrete categories of tailwind and considers those flights that have high tailwind and low temperature as weather-preferred routes.

Once the flights with wind-preferred routes and non-wind-preferred routes have been identified, the disclosed methodology performs a comparative analysis. However, to make a fair comparison, the disclosed methodology uses a set of wind-preferred routes and non-wind-preferred routes, where their cruise altitude and weights at Top of Climb (ToC) match. Furthermore, to match the lateral distances between two sets, the disclosed methodology adds an additional fuel burn amount to the flight set that presents shorter average lateral distance.

Using the categorized CPL dataset, the disclosed methodology also runs a series of Machine Learning (linear, non-linear, ensemble) and Deep Learning algorithms (Recurrent Neural Networks) based on two meteorological parameters (wind speed/direction and temperature) and builds a number of regression models, which compete with each other for higher accuracy. The top-ranking algorithm is used to formulate the amount of savings in carbon emissions and fuel burn for each flight. An added benefit is that the predictions can be made prior to fueling, thereby limiting the initial weight of the aircraft and further reducing the fuel consumption and emissions.

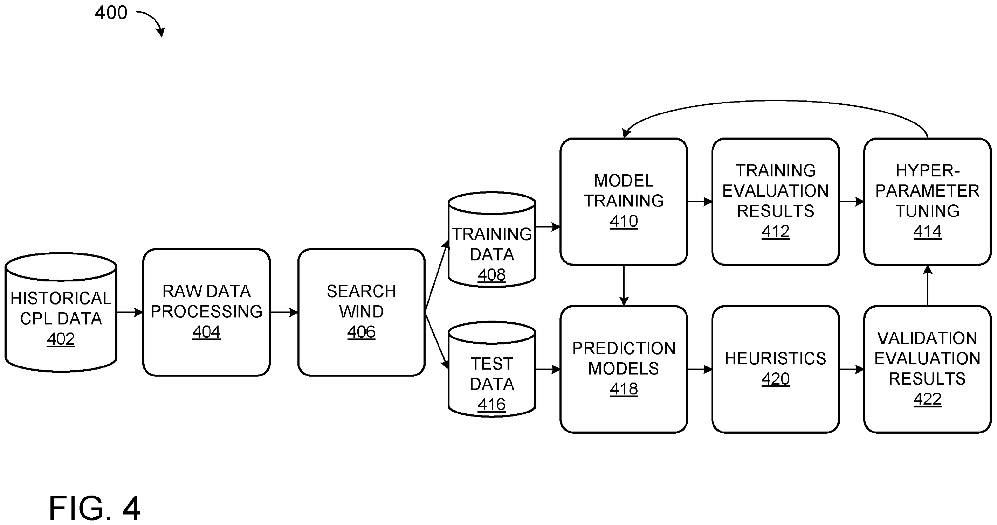

FIG. 4 schematically shows an example machine learning pipeline 400 that may be used to train a model for inferring fuel burn and emissions for cruise phases of flights based on wind-preferredness. Machine learning pipeline 400 uses a data-driven approach, e.g., historical data for actual flown flights. Hence, the quantitative value of fuel burn computed is based on ground truth. Mapping the fuel burn and emissions involves training various regression models and inferring the fuel burn/emissions as sorted by wind-preferredness and/or weather-preferredness. Using a categorized CPL dataset, machine learning pipeline 400 runs a series of Machine Learning (linear, non-linear, ensemble) and Deep Learning algorithms (Recurrent Neural Networks, LSTMs) based on configurable parameters (e.g., tail wind vector and temperature) and builds a number of regression models, which compete with each other for higher accuracy. The top-ranking algorithm is used to formulate the amount of savings in carbon emissions and fuel burn for each cruise phase. Such a machine learning pipeline may be selected to be specific to aviation. The resulting models may be specific to fuel bum/emissions, and to the cruise phase of each flight. Because there is a time series in the data, machine learning pipeline 400 may be specific to sequence-to-sequence learning problems. As such, long short-term memory models may be used.

Historical CPL data 402 may include multivariate data for one or more prior flights. A set of parameters are extracted from the historical CPL data in the form of a time series including time, latitude, longitude, altitude, aircraft weight, flight phase, fuel flow - left engine, fuel flow - right engine. Atmospheric conditions may also be provided in historical data, such as wind speed, wind direction, temperature, pressure, humidity, etc.

Machine learning pipeline 400 takes historical data, such as CPL data and feeds it into raw data processing 404. Raw data processing 404 includes at least dimensionality reduction and feature engineering to select the salient features of the data. Raw data processing 404 may aid in developing data sets that are more granular and more adapted, yielding more accurate results. Raw data processing 404 may further include data normalization, such as by normalizing cruise phases by distance. This may include padding cruise phases in some instances and paring cruise phases in other instances to generate clusters of data having a same or similar distance.

Raw data processing may include iteratively reducing the number of parameters that get fed into model training. Raw data processing may include performing parameter correlations. The historic and CPL data may comprise hundreds of parameters recorded at 1 Hz frequency, and not all may be predictive for cruise phase wind preferredness.

In some examples, processed raw data is selected as training data 408 and fed directly into model training 410.

However, for increased accuracy and confidence, the processed raw data may first be fed into search wind 406. Search wind 406 is performed on the processed data. Search wind is a heuristics algorithm that is used to first identify tailwinds from the multivariate data. If cruise phases have not already been extracted from flight data, they can be at search wind. In some examples, tail wind may be considered over a continuum. Search wind may otherwise group flights into discretized buckets of cruise phases based on tail wind ranges e.g., wind preferredness. Tail wind may be based on wind speed, wind direction, air temperature, air pressure, ground speed, airspeed, etc. Each discretized bucket may include cruise phases with a range of tailwinds (e.g., 0-10 mph, 10-20 mph, etc.). In some examples, cruise phases may be sorted by air temperature and/or altitude (e.g., weather preferredness). Search wind then looks at how those cruise phases are mapped to the additional emissions or fuel burn. Search steps may take into account take-off weight, weight at top of ascent, aircraft type, origin-destination pair, airline etc.

Some or all of the historical wind searched data is treated as training data 408 and fed into model training 410. Two or more prediction models may be used for model training 410, including various types of prediction models. Such prediction models may include linear regression, lasso, elastic net for non-linear classification regression, trees, support, vector, regression views, k nearest neighbors, ensemble models, extra gradient boosting, random forest, extra trees regression, as well as regular artificial neural networks. A number of architectures may be used in competitive fashion to determine a single best model. The inputs for each model may be the same or similar, but the outputs, hidden layers, number of neurons in each layer, etc. may vary across models. Models may be run in parallel and in a distributive fashion with the goal of selecting the best performing model as a predictive model.

Sequence prediction often involves predicting the next value in a sequence, which can be framed as a sequence prediction problem of one input time step to one output time step, or multiple input time steps to one output time step. A more challenging problem, however, is to take a sequence as input and to return another, predicted sequence as output. This is a sequence-to-sequence (seq2seq) prediction problem, and it is made more challenging when the length of the input and output sequences can vary. An effective approach to seq2seq prediction problems is the encoder-decoder long short-term memory (E-D LSTM) architecture. The system comprises two cooperative models-an encoder for reading the input sequence and encoding it into a fixed-length vector, and a decoder for decoding the fixed-length vector and outputting the predicted sequence.

Consider a sequence $X = \{x^{(1)}, x^{(2)}, ..., x^{(L)}\}$ of length $L$, where each point $x^{(i)} \in \mathbb{R}^m$ is an $m$-dimensional vector of readings for m variables at time-instance $t_i$. This translates to a scenario in which a flight includes $L$ time steps, where, at each time step $t_i$, $m$ sensor readings are recorded. In one example, an E-D LSTM model is trained to reconstruct instances of the recorded fuel burn. The LSTM encoder learns a fixed length vector representation of the input sequence, and the LSTM decoder uses this representation to reconstruct the output sequence using the current hidden state and the value predicted at the previous time-step.

Given $X$, $h_E^{(i)}$ is the hidden state of the encoder at time $t_i$ for each $i \in \{1,2,...,L\}$, where $h_E^{(i)} \in \mathbb{R}^c$, and $c$ is the number of LSTM units in the hidden layer of the encoder. The encoder and decoder are jointly trained to reconstruct the time-series in reverse order, i.e., the target time-series is $\{x^{(L)}, x^{(L-1)}, ..., x^{(1)}\}$. The final state $h_E^{(L)}$ of the encoder is used as the initial state for the decoder. A linear layer on top of the LSTM decoder layer is used to predict the target. During training, the decoder uses $x^{(i)}$ as input to obtain the state $h_D^{(i-1)}$, and then predict $x'^{(i-1)}$ corresponding to target $x^{(i-1)}$. During inference, the predicted value $x'^{(i)}$ is input to the decoder to obtain $h_D^{(i-1)}$ and predict $x'^{(i-1)}$. The model is trained to minimize the objective

$$\sum_{X \in s_N} \sum_{i=1}^{L} \|x^{(i)} - x'^{(i)}\|^2 \, ,$$

$$(\text{Eq. 1})$$

where $s_N$ is the set of training sequences.

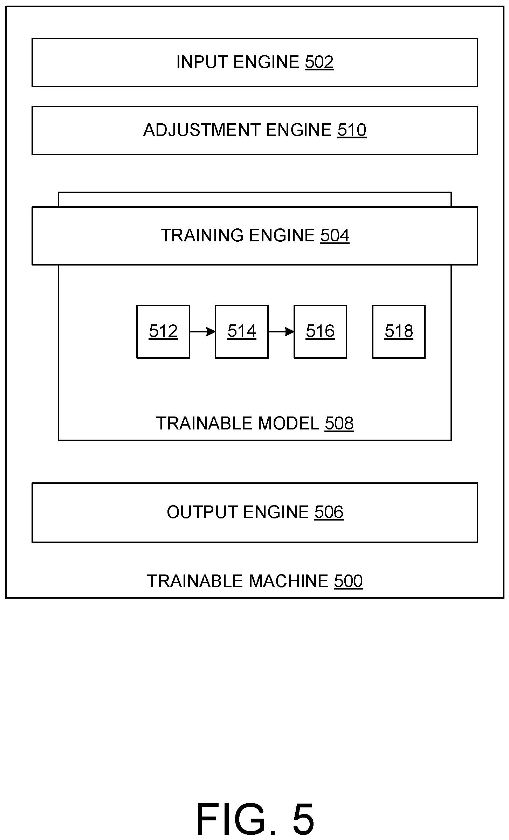

In this spirit, FIG. 5 shows aspects of an example trainable machine 500 that is trainable to make fuel burn and emissions predictions for aircraft flights during the cruise segment of a flight based at least on the wind-preferredness of a candidate flight track. The trainable machine includes, *inter alia,* an input engine 502, a training engine 504, an output engine 506, and a trainable model 508.

Input engine 502 is configured to receive training data for cruise phases for each of a pre-selected series of prior flights. The training data comprises, for each cruise phase of each prior flight of the series, a corresponding sequence of multivariate flight data that was recorded during the prior flight. In some examples each corresponding sequence includes FDR data selected via principle-component analysis. In some examples each corresponding sequence includes atmospheric data.

The trainable machine may further comprise an adjustment engine 510. When included, the adjustment engine may be configured to adjust each corresponding sequence to provide a common cruise length for the cruise phase. In some examples and scenarios, adjusting each corresponding sequence comprises padding the corresponding sequence in the cruise phase. A given phase can be padded so as to adjust a length of the phase. In some examples and scenarios, adjusting each corresponding sequence may include trimming longer corresponding sequences.

Training engine 504 is configured to process each corresponding sequence of multivariate flight data according to a trainable model 508. As described herein, such processing develops incrementally a hidden state in the trained model. When fully developed, the hidden state is one that minimizes an overall residual for replicating the fuel burn quantities in each corresponding sequence. As noted hereinabove, replicating the fuel burn quantities comprises transforming the multivariate flight data from a previous time step in each corresponding sequence, based on the hidden state.

In some examples trainable model 508 comprises a trainable encoder 512 arranged logically upstream of a trainable decoder 514. The encoder is trainable to emit a vector that featurizes an input sequence of multivariate flight data; the decoder is trainable to replicate the fuel burn quantities of the input sequence based on the vector, thereby generating an output sequence. The number of parameters included in the input sequence may vary from one example to another. In some examples the parameters include, but are not limited to flight date, time, duration, latitude, longitude, aircraft weight, wind speed, wind direction, air temperature, air pressure, altitude, groundspeed, airspeed, etc. Those parameters among others may be used to calculate a tail wind. In other examples, other parameters, additional parameters, or fewer parameters may be used. Generally speaking, models trained for specific tracks and specific aircraft may be capable of making accurate predictions based on fewer input parameters than more generally applicable models.

In some examples the encoder and the decoder are configured according to a long short-term memory (LSTM) architecture. In some examples the trainable model comprises an encoder-decoder LSTM (E-D LSTM) model; a convolutional neural-network (CNN) LSTM encoder-decoder (CNN LSTM E-D) model; or a convolutional LSTM encoder-decoder (ConvLSTM E-D) model. In some examples the trainable model further comprises a fully connected layer 516 configured to interpret the fuel burn quantities at each time step of the output sequence before the final output layer. More particularly, the fully connected layer may be the penultimate layer of the trainable model. The fully connected layer may be configured to feed the output layer (*vide infra*), which predicts a single step in the output sequence (e.g., not all *L* steps at once). By way of illustration, consider a flight comprising ten-minute time steps. In the output layer the fuel flow amount may be predicted as a series {120, 1130, 2142, ...}, where the first number, 120, corresponds to the amount of fuel burned in the first 1-minute time step, the second number corresponds to the amount of fuel burned in the first two time steps (e.g., 11 minutes), and so on. Trainable model 508 may include one or more hyperparameters 518, which may manage machine learning model training. Hyperparameters may be set manually at the outset of training and may be manually or automatically tuned over the course of model training.

When included, an E-D LSTM model may comprise an encoder that reads the input sequence and outputs a vector which captures features from the input sequence. The number of time steps *L* may vary depending upon the duration of a cruise phase, which defines the fixed length as input. The internal representation of the input sequence may be repeated multiple times at a repeat layer and presented to an LSTM decoder. Such an E-D LSTM model may comprise a fully connected layer to interpret each time step in the output sequence before the final output layer. The output layer may predict a single step in the output sequence, not all *L* steps at once. To that end, the interpretation layer and the output layer can be wrapped in a TimeDistributed wrapper, which allows the wrapped layers to be used for each time step from the decoder. Such a TimeDistributed wrapper may create a fully connected (e.g., dense) layer applied separately to each time step. This enables the LSTM decoder to figure out the context required for each step in the output sequence, and the wrapped, dense layers to interpret each time step separately, but reusing the same weights to perform the interpretation.

When included, a CNN LSTM E-D model may include first and second CNN layers that act as the encoder. The first CNN layer may read across the input sequence and project the results onto feature maps. The second CNN layer may perform the same operation on the feature maps created by the first CNN layer, attempting to amplify any salient features. A max pooling layer may simplify the feature maps by keeping the one quarter of the values having maximum signal. The distilled feature maps, downstream of the max pooling layer, can be flattened in a flattening layer into one long vector, which after repetition in a repeat layer, may be used as input to the decoding process. The decoder may be another LSTM hidden layer, which may be followed by a TimeDistributed wrapper that feeds the output layer.

When included, a ConvLSTM E-D model may use a CNN layer to read the input into the LSTM units. ConvLSTM is a type of recurrent neural network for spatio-temporal prediction that provides convolutional structures in both the input-to-state and state-to-state transitions. The ConvLSTM determines the future state of a certain cell in the grid by the inputs and past states of its local neighbors. In some examples, the CNN layer is arranged logically upstream of a flattening layer, a repeat layer, an LSTM decoder and a *TimeDistributed* layer.

Output engine 506 is configured to expose at least a portion of the hidden state of trainable model 508, as developed by training. The manner of 'exposure' of the portion of the hidden state may vary from one implementation to the next. In particular, this disclosure contemplates a scenario in which one computer system receives and processes training data for a great many prior flights and is then tasked to make predictions based on the hidden state developed therein. In other words the trainable machine, after development of the hidden state *is* the trained machine. In this scenario, exposure means only that the portion of the hidden state required for the predictions is made available to a prediction engine (*vide infra*). For instance, the data structure holding the weights and coefficients characterizing the hidden state may be scoped in a way that enables access by the prediction engine. This disclosure also contemplates a scenario in which the computer system that receives and processes the training data is distinct from one or more computer systems tasked with making the predictions. In other words, the trainable machine may be distinct from the trained machine. In that scenario, exposure of the portion of the hidden state means that the weights and coefficients required for predictions are communicated from the computer system that has processed the training data to the one or more computer systems tasked with making the predictions. After appropriate training, trainable machine 500, or another trained machine, can be used to make fuel burn and emissions predictions for aircraft flight.

Returning to FIG 4, model training 410 yields training evaluation results 412 . Model training 410 has the objective of approximating a function that maps input parameters (e.g., tailwind, altitude, temperature) to a fuel-burn quantity, and is thus a regression problem. As such, the function approximation is used to predict a fuel-burn quantity for a particular flight under particular flight parameters and conditions. Training evaluation results 412 may evaluate such a function approximation using pertinent metrics, such as root-mean-square error (RMSE), mean absolute error (MAE), mean absolute percentage error (MAPE), etc. to quantify the trained model's quality and performance.

The training evaluation results 412 are used to perform hyperparameter tuning steps 414. Tuned hyperparameters are fed back into model training 410 on an iterative basis. Each distinct model type may expose their own set(s) of hyperparameters. In some examples, a single model may be trained and evaluated using multiple sets of hyperparameters. For each model, depending on whether it is linear (e.g., linear, lasso, or elastic-net regression), nonlinear (e.g., classification and regression trees, support vector regression, k-nearest neighbors), ensemble (e.g., adaptive boosting, extra gradient boosting, random forest regression, or extra trees regression), or neural network-based (e.g., variants of LSTM), hyperparameters may be tuned by using various search techniques (e.g., grid search, optuna, bohb, random) that reach top performance value for each model. Models are then ranked.

Some of the searched wind data are treated as test data. For example, given a year's worth of flight data, 11 months may be used as training data 408 to build the model, and one month treated as "new" test data, albeit with known outcomes. In some examples, the contents of training data 408 and test data 416 are rotated over different training and prediction iterations e.g., until all available data is evaluated as test data. Test data 416 is fed into one or more trained prediction models 418 that are informed by model training 410.

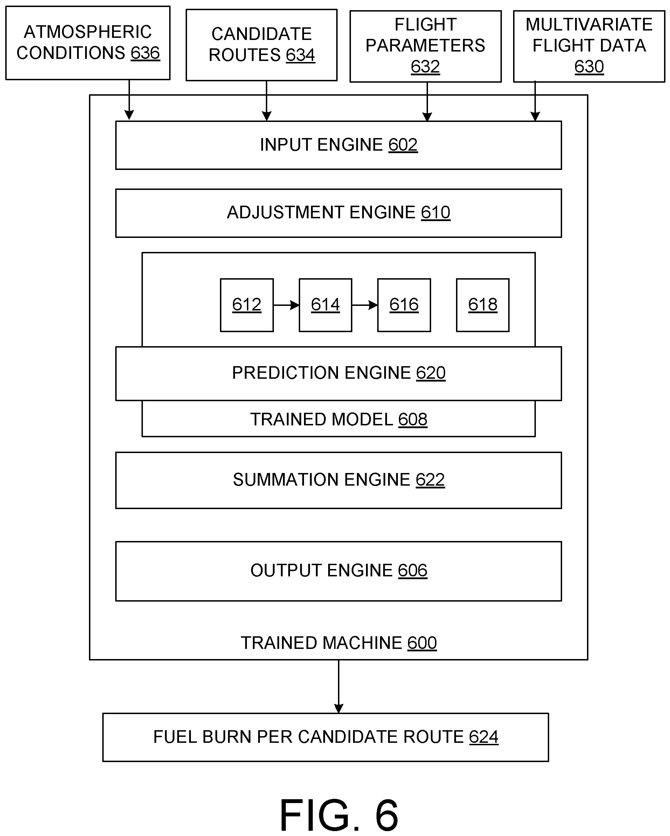

FIG. 6 shows aspects of an example trained machine 600 trained to make fuel burn and emissions predictions for aircraft flight. Trained machine 600 includes, *inter alia,* an input engine 602, a prediction engine 620, a summation engine 622, an output engine 606, and a trained model 608.

Input engine 602 is configured to receive at least one sequence of multivariate flight data 630 recorded during a prior flight. Input engine 602 is further configured to receive flight parameters 632. Flight parameters may include aircraft type, airline, aircraft weight, any constraints on the flight, etc. Input engine 602 is further configured to receive one or more candidate routes 634. Any number of unique candidate routes may be input, though candidate routes may share one or more cruise segments. Candidate routes may include cruise tracks that are available for selection for flights. Input engine 602 is further configured to receive atmospheric conditions 636. Atmospheric conditions may include wind conditions, temperature, humidity, and any other weather conditions that may impact the flight of an aircraft during a cruise phase. Atmospheric conditions may be tied to one or more candidate routes 634 and may include current atmospheric conditions as well as predicted atmospheric conditions over the course of the prospective flight.

Prediction engine 620 is configured to predict a sequence of fuel burn quantities over a candidate route based on at least one sequence of multivariate flight data recorded during a prior flight and on a hidden state of trained machine 600.

In some examples trained model 608 comprises a trained encoder 612 arranged logically upstream of a trained decoder 614. The encoder is trained to emit a vector that featurizes an input sequence of multivariate flight data; the decoder is trained to replicate the fuel burn quantities of the input sequence based on the vector, thereby generating an output sequence. In some examples the encoder and the decoder are configured according to a long short-term memory (LSTM) architecture. In some examples the trained model comprises an encoder-decoder LSTM (E-D LSTM) model, a convolutional neural-network LSTM encoder-decoder (CNN LSTM E-D) model, or a convolutional LSTM encoder-decoder (ConvLSTM E-D) model. In some examples the trained model further comprises a fully connected layer 616 configured to interpret the fuel burn quantities at each time step of the output sequence before the final output layer. In some examples the fully connected layer may be the penultimate layer of the trained model. Trained model 608 may be operated with a set of hyperparameters 618 which may evolve as trained model 608 is deployed.

Returning to FIG. 4, results of the prediction models are evaluated via heuristics 420 for top ranking algorithms. Heuristics 420 may be used to determine which models are performing best, and in turn used to select which models move on to the next round of evaluation. The number of models that move on may depend on relative performance of the models, e.g., where there is a significant drop in performance.

Heuristics 420 are fed into validation evaluation results 422. The validation evaluation results 422 are used to iteratively inform hyperparameter tuning 414. Validation evaluation results 422 may include various performance metrics, such as accuracy, standard deviation, confidence, RMSE, absolute error, percentage error, etc. Hyperparameter tuning may proceed iteratively, with successful models trained, retrained, and tested.

In this way, multiple models may be evaluated in parallel, with the top performing models iteratively selected to inform the prediction models. For example, a number of neural networks may be developed and run at the same time in parallel, then ranked, with the top K moving forward, eventually determining a single best performing model that can be used for inference. Models may be varied in terms of how many layers they have, how many neurons comprise each layer, what activation functions are used, optimization algorithms, hyperparameter values, etc.

Returning to FIG. 6, trained machine 600 includes summation engine 622. Summation engine 622 is configured to sum the fuel burn quantities over the candidate cruise phase, to obtain a fueling estimate as described above. Output engine 606 is configured to output the estimated fuel burn per candidate route 624. In some examples output engine 606 is further configured to output an emissions estimate based on the fueling estimate. For instance, the output engine may multiply the fuel burn estimate (in mass units) by 3.16 to output a carbon-dioxide emissions estimate.

Fuel flow will change over time across time steps, yielding changes in aircraft weight over time. Prediction engine 620 may thus be applied to determine fuel burn per time step over each candidate route, with summation engine generating a total fuel burn per candidate route 624. The fuel burn per candidate route 624 may be used to determine an amount of fuel to load prior to takeoff, may be used to inform pilots and air traffic control of which candidate routes will result in the least amount of fuel burned, to optimize control of fully autonomous or partially autonomous aircraft, etc. Fuel burn per candidate route 624 may be output as a total fuel burn, as left engine fuel flow and right engine fuel flow, etc. As atmospheric conditions 636 are updated (in real time or as predicted conditions), different candidate routes and route segments may be predicted to have higher tailwinds and thus reduced fuel burn.

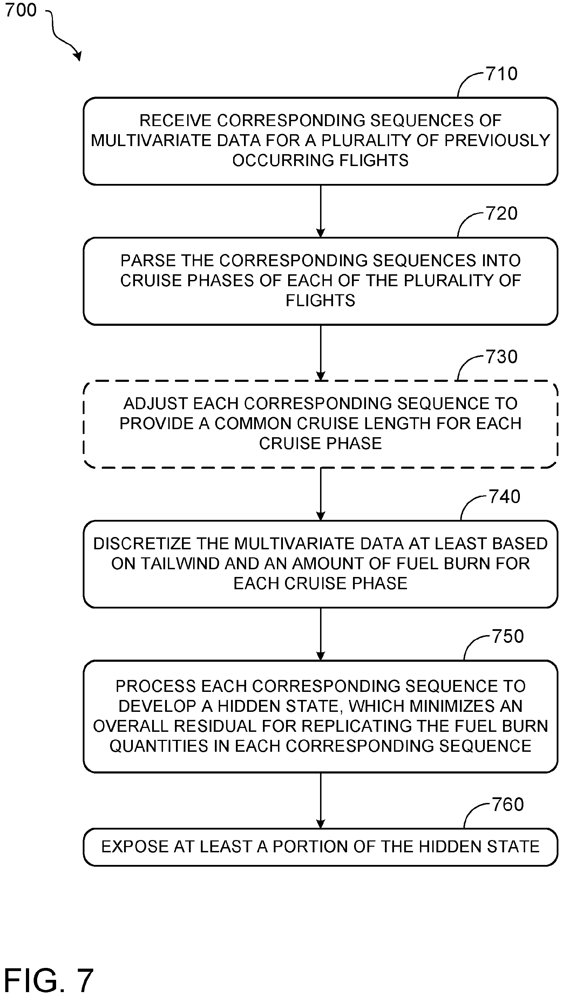

FIG. 7 shows a flow diagram for an example method 700 of training a machine to predict fuel burn for an aircraft over a cruise phase of a flight. Method 700 may be applied to a trainable machine, such as trainable machine 500.

At 710, method 700 includes receiving corresponding sequences of multivariate data for a plurality of previously occurring flights. Each sequence of multivariate flight data may be recorded during a prior flight at a frequency (e.g., 1 Hz). In some examples, the multivariate flight data may include FDR data (e.g., CPL data) selected by principle-component analysis. Included parameters may include time, latitude, longitude, altitude, aircraft weight, flight phase, fuel flow - left engine, fuel flow - right engine. Atmospheric conditions may also be provided in historical data, such as wind speed, wind direction, temperature, pressure, humidity, etc.

At 720, method 700 includes parsing the corresponding sequences into cruise phases of each of the plurality of flights. The multivariate flight data may be separated into flight phases, such as climb phase, cruise phase, and descent phase, with the cruise phase extracted. Each cruise phase may be defined as spanning from top of climb to top of descent within the prior flight.

Optionally, at 730, method 700 includes adjusting each corresponding sequence to provide a common cruise length for each cruise phase. For example, shorter cruise phases may be padded in length and/or longer cruise phases may be trimmed in length, as even flights with common origin and destination airports may extend over differing lengths. Parameters for padded cruise phases may be extrapolated from the multivariate flight data.

At 740, method 700 includes discretizing the multivariate data at least based on tailwind and an amount of fuel burn for each cruise phase. As such, the multivariate data for flights with similar characteristics may be grouped together in a plurality of buckets. The multivariate flight data may be discretized based on ranges of other parameters, such as altitude, air temperature, take-off weight, etc.

At 750, method 700 includes processing each corresponding sequence to develop a hidden state, which minimizes an overall residual for replicating the fuel burn quantities in each corresponding sequence. Replicating the fuel burn quantities may comprise transforming the multivariate flight data from a previous time step in each corresponding sequence, based on the hidden state.

At 760, method 700 includes exposing at least a portion of the hidden state. In particular, this disclosure contemplates a scenario in which one computer system receives and processes training data for a great many prior flights and is then tasked to make predictions based on the hidden state developed therein. For example, exposure may mean only that the portion of the hidden state required for the predictions is made available to a prediction engine. For instance, the data structure holding the weights and coefficients characterizing the hidden state may be scoped in a way that enables access by the prediction engine. In other examples, exposure means only that the portion of the hidden state required for the predictions is made available to a prediction engine. For instance, the data structure holding the weights and coefficients characterizing the hidden state may be scoped in a way that enables access by the prediction engine.

In some examples, method 700 may further comprise training two or more machines to predict fuel burn for an aircraft over a cruise phase of a flight, evaluating training results for each of the two or more machines, and adjusting hyperparameters for at least one machine based on the training results. A number of models may compete with each other for higher accuracy.

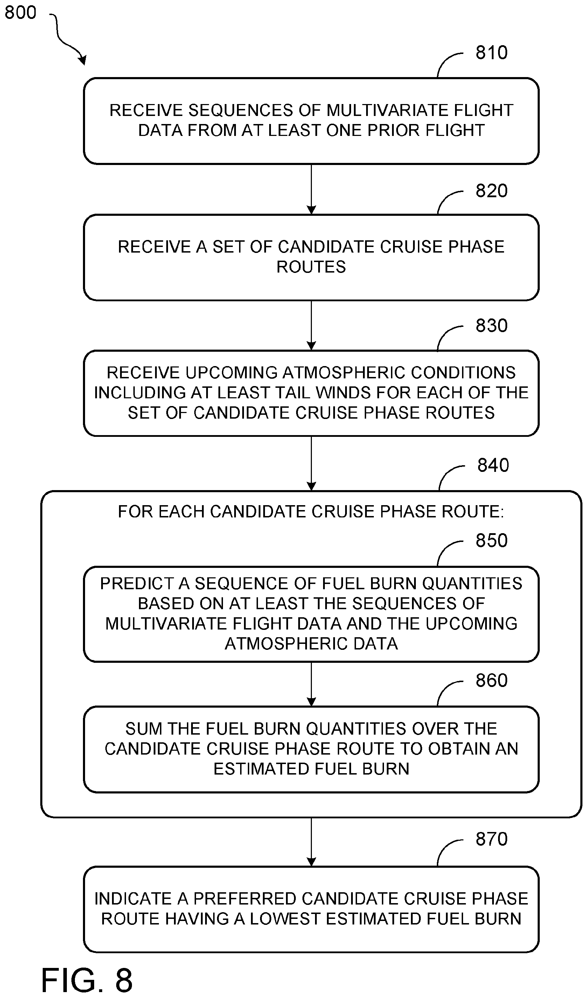

FIG. 8 shows a flow diagram for an example method 800 for selecting a cruise phase route for an aircraft. Method 800 may be performed by a trained machine, such as trained machine 600. At 810, method 800 includes receiving sequences of multivariate flight data from at least one prior flight. Each sequence of multivariate flight data may be recorded during a prior flight at a frequency (e.g., 1 Hz). In some examples, the multivariate flight data may include FDR data (e.g., CPL data) selected by principle-component analysis. Included parameters may include time, latitude, longitude, altitude, aircraft weight, flight phase, fuel flow - left engine, fuel flow - right engine. Atmospheric conditions may also be provided in historical data, such as wind speed, wind direction, temperature, pressure, humidity, etc.

The number of input sequences received is not particularly limited. Each input sequence comprises flight data recorded during a prior flight that shares at least some features of the planned flight. In some examples the at least one sequence of multivariate flight data shares the departure airport, the arrival airport, and the aircraft model of the planned flight. In some examples the at least one sequence of multivariate flight data comprises data which is analogous to the training data hereinabove. Such data may include FDR data selected via principal component analysis (PCA), for instance. In some examples the at least one sequence of multivariate flight data includes atmospheric (e.g., weather) data.

In some examples the input data may comprise fewer parameters than the training sequences. For instance, a suitable model may be trained for a specific airline, specific aircraft type, and specific departure and arrival airports. In that case, fewer parameters would be required for predicting fuel burn than in a more generic model.

In some examples, each sequence of multivariate flight data may share a departure airport, an arrival airport, and an aircraft specifier of a planned flight. The multivariate flight data may be separated into flight phases, such as climb phase, cruise phase, and descent phase, with the cruise phase extracted. Each cruise phase may be defined as spanning from top of climb to top of descent within the prior flight. In some examples, a length of one or more cruise phases included in the multivariate data is adjusted to a common cruise phase length. For example, shorter cruise phases may be padded in length and/or longer cruise phases may be trimmed in length, as even flights with common origin and destination airports may extend over differing lengths. Parameters for padded cruise phases may be extrapolated from the multivariate flight data. In some examples, the multivariate flight data is discretized based on ranges of tail wind speeds. The multivariate flight data may be discretized based on ranges of other parameters, such as altitude, air temperature, take-off weight, etc.

At 820, method 800 includes receiving a set of candidate cruise phase routes. Each candidate cruise phase route may be predetermined route between a top of climb from an origin airport to atop of descent approaching a destination airport. The set of candidate cruise phase routes may include routes that are available for a planned flight (e.g., not being assigned to another aircraft, not in the path of severe weather). Cruise phase routes may include a plurality of segments. Segments of different cruise phase routes may intersect. As such, two or more candidate cruise phase routes include one or more overlapping segments.

At 830, method 800 includes receiving upcoming atmospheric conditions including at least upcoming tail winds for each of the set of candidate cruise phase routes. Atmospheric conditions may include wind speed, wind direction, air temperature, air pressure, humidity, weather conditions, and other suitable atmospheric conditions. Upcoming atmospheric conditions may include current and predicted atmospheric conditions for a time window around a planned flight.

Method 800 may further include receiving flight parameters for the aircraft. The received flight parameters may be assigned to a planned flight. Flight parameters may include airline, aircraft, take-off weight - fuel, air restrictions, etc.

At 840, method 800 includes iterations for each candidate cruise phase route. At 850, method 800 includes predicting a sequence of fuel burn quantities based on at least the sequences of multivariate flight data and the upcoming atmospheric data. Each sequence of fuel burn quantities may be further based on received flight parameters for the aircraft.

In other words, in a flight (or portion of a flight) characterized by N time steps, a distinct fuel burn prediction is made for each of the N time steps. The prediction is based on the at least one input sequence and on a hidden state of the trained machine. During training, as noted above, a corresponding sequence of multivariate flight data recorded during each of a pre-selected series of prior flights is processed in a trainable machine to develop the hidden state. The hidden state is a state that minimizes an overall residual for replicating the fuel burn quantities in each corresponding sequence.

Predicting a sequence of fuel burn quantities can be further based on a hidden state of a trained machine. Predicting the sequence of fuel burn quantities may comprise transforming the multivariate flight data from a previous time step in the at least one sequence based on the hidden state. For each of a pre-selected series of prior flights, a corresponding sequence of multivariate flight data recorded during the prior flight may be processed in a trainable machine to develop the hidden state. The hidden state may be configured to minimize an overall residual for replicating the fuel burn quantities in each corresponding sequence.

Predicting the sequence of fuel burn quantities may comprises transforming the multivariate flight data from a previous time step in the at least one sequence based on the hidden state. To that end, an encoder may emit a vector featurizing the input sequence. A decoder may decode the vector to generate the output sequence.

At 860, method 800 includes summing the fuel burn quantities over the candidate cruise phase route to obtain an estimated fuel burn. In some examples, the estimated fuel burn may be separated into left-engine fuel burn and right-engine fuel burn. At 870, method 800 includes indicating a preferred candidate cruise phase route having a lowest estimated fuel burn. For example, the preferred candidate cruise phase route may be indicated to a pilot, may be indicated in a flight plan, may be sent to the federal aviation administration, etc.

In some examples, method 800 may be performed prior to fueling an aircraft for takeoff. As such, in some examples, method 800 further includes fueling the aircraft based at least on the lowest estimated fuel burn. For example, the aircraft may be fueled based on an estimated fuel burn for an ascent phase, an estimated fuel burn for a descent phase, and the lowest estimated fuel burn for the cruise phase. The aircraft may further be fueled based on a safety margin of fuel.

In some examples, the aircraft is at least partially autonomous. In such examples, method 800 may further comprise controlling the aircraft to follow the preferred candidate cruise phase route.

In some examples, method 800 may be performed while an aircraft is in flight. As such, the method may include receiving candidate cruise phase routes from the aircraft's current location to top of descent at the destination airport. A current cruise route may be adjusted or changed as atmospheric conditions change and an updated cruise phase route is determined to indicate a reduced fuel burn quantity. For example, an aircraft may be indicated to follow a different cruise phase route segment at a cruise phase route segment intersection.

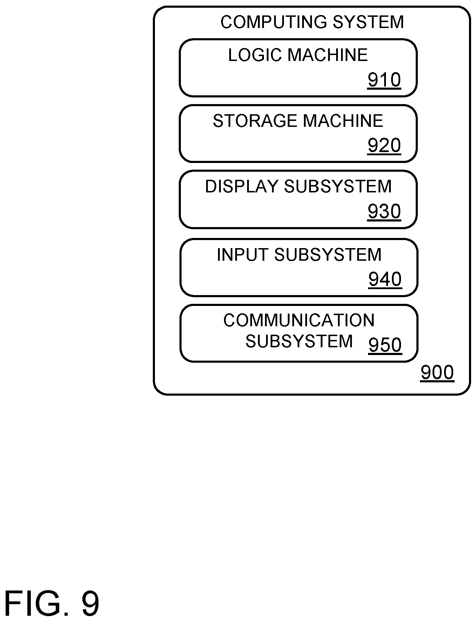

FIG. 9 schematically shows a non-limiting embodiment of a computing system 900 that can enact one or more of the methods and processes described above. Computing system 900 is shown in simplified form. Computing system 900 may take the form of one or more personal computers, server computers, tablet computers, home-entertainment computers, network computing devices, gaming devices, mobile computing devices, mobile communication devices (e.g., smart phone), and/or other computing devices.

Computing system 900 includes a logic machine 910 and a storage machine 920. Computing system 900 may optionally include a display subsystem 930, input subsystem 940, communication subsystem 950, and/or other components not shown in FIG. 9. Machine learning pipeline 400, trainable machine 500 and trained machine 600 are examples of computing system 900.

Logic machine 910 includes one or more physical devices configured to execute instructions. For example, the logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine may include one or more processors configured to execute software instructions. Additionally or alternatively, the logic machine may include one or more hardware or firmware logic machines configured to execute hardware or firmware instructions. Processors of the logic machine may be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of the logic machine may be virtualized and executed by remotely accessible, networked computing devices configured in a cloud-computing configuration.

Storage machine 920 includes one or more physical devices configured to hold instructions executable by the logic machine to implement the methods and processes described herein. When such methods and processes are implemented, the state of storage machine 920 may be transformed-e.g., to hold different data.

Storage machine 920 may include removable and/or built-in devices. Storage machine 920 may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage machine 920 may include volatile, nonvolatile, dynamic, static, read/write, read-only, random-access, sequential-access, location-addressable, file-addressable, and/or content-addressable devices.

It will be appreciated that storage machine 920 includes one or more physical devices. However, aspects of the instructions described herein alternatively may be propagated by a communication medium (e.g., an electromagnetic signal, an optical signal, etc.) that is not held by a physical device for a finite duration.

Aspects of logic machine 910 and storage machine 920 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 900 implemented to perform a particular function. In some cases, a module, program, or engine may be instantiated via logic machine 910 executing instructions held by storage machine 920. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

It will be appreciated that a "service", as used herein, is an application program executable across multiple user sessions. A service may be available to one or more system components, programs, and/or other services. In some implementations, a service may run on one or more server-computing devices.

When included, display subsystem 930 may be used to present a visual representation of data held by storage machine 920. This visual representation may take the form of a graphical user interface (GUI). As the herein described methods and processes change the data held by the storage machine, and thus transform the state of the storage machine, the state of display subsystem 930 may likewise be transformed to visually represent changes in the underlying data. Display subsystem 930 may include one or more display devices utilizing virtually any type of technology. Such display devices may be combined with logic machine 910 and/or storage machine 920 in a shared enclosure, or such display devices may be peripheral display devices.

When included, input subsystem 940 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 950 may be configured to communicatively couple computing system 900 with one or more other computing devices. Communication subsystem 950 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 900 to send and/or receive messages to and/or from other devices via a network such as the Internet.

Further, the disclosure comprises configurations according to the following examples.

Example 1. A, in particular computer-implemented, method for selecting a cruise phase route for an aircraft, comprising: receiving sequences of multivariate flight data from at least one prior flight; receiving a set of candidate cruise phase routes; receiving upcoming atmospheric conditions including at least upcoming tail winds for each of the set of candidate cruise phase routes; for each candidate cruise phase route, predicting a sequence of fuel burn quantities based on at least the sequences of multivariate flight data and the upcoming atmospheric conditions; and summing the fuel burn quantities over the candidate cruise phase route to obtain an estimated fuel burn; and indicating a preferred candidate cruise phase route having a lowest estimated fuel burn.

Example 2. The method of example 1, further comprising fueling the aircraft based at least on the lowest estimated fuel burn.

Example 3. The method of example 1 or 2, wherein the aircraft is at least partially autonomous, the method further comprising: controlling the aircraft to follow the preferred candidate cruise phase route.

Example 4. The method of any of examples 1 to 3, wherein each sequence of fuel burn quantities is further based on received flight parameters for the aircraft.

Example 5. The method of any of examples 1 to 4, wherein the atmospheric conditions further include air temperature.

Example 6. The method of any of examples 1 to 5, wherein the atmospheric conditions further include altitude.

Example 7. The method of any of examples 1 to 6, wherein the multivariate flight data is discretized based on ranges of tail wind speeds.

Example 8. The method of any of examples 1 to 7, wherein a length of one or more cruise phases included in the multivariate flight data is adjusted to a common cruise phase length.

Example 9. The method of any of examples 1 to 8, wherein two or more candidate cruise phase routes include one or more overlapping segments.

Example 10. The method of any of examples 1 to 9, wherein predicting the sequence of fuel burn quantities is further based on a hidden state of a trained machine, wherein for each of a pre-selected series of prior flights, a corresponding sequence of multivariate flight data recorded during the prior flight is processed in a trainable machine to develop the hidden state, which minimizes an overall residual for replicating the fuel burn quantities in each corresponding sequence.

Example 11. A, in particular computer-implemented, machine trained to make fuel burn predictions for aircraft flight, comprising: an input engine configured to: receive sequences of multivariate flight data from at least one prior flight; receive a set of candidate cruise phase routes; and receive upcoming atmospheric conditions including at least upcoming tail winds for each of the set of candidate cruise phase routes; a prediction engine configured to, for each candidate cruise phase route, predict a sequence of fuel burn quantities based on at least the sequences of multivariate flight data and the upcoming atmospheric conditions; a summation engine configured to sum the fuel burn quantities over each candidate cruise phase route to obtain an estimated fuel burn; and an output engine configured to indicate a preferred candidate cruise phase route having a lowest estimated fuel burn.

Example 12. The machine of example 11, wherein the input engine is further configured to receive flight parameters for an aircraft, and wherein each sequence of fuel burn quantities is further based on the received flight parameters for the aircraft.

Example 13. The machine of example 11 or 12, wherein the multivariate flight data is discretized based on ranges of tail wind speeds.

Example 14. The machine of any of examples 11 to 13, further comprising an adjustment engine configured to adjust a length of one or more cruise phases included in the multivariate flight data to a common cruise phase length.

Example 15. The machine of any of examples 11 to 14, further comprising a trained encoder arranged logically upstream of a trained decoder, wherein the encoder is trained to emit a vector that featurizes an input sequence of multivariate flight data, and wherein the decoder is trained to replicate the fuel burn quantities of the input sequence based on the vector, thereby generating an output sequence.

Example 16. The machine of any of examples 11 to 15, wherein the encoder and the decoder are configured according to a long short-term memory (LSTM) architecture.

Example 17. The machine of any of examples 11 to 16, further comprising a fully connected layer configured to interpret the fuel burn quantities at each time step of the output sequence.

Example 18. A, in particular computer-implemented, method of training a machine to predict fuel burn for an aircraft over a cruise phase of a flight, comprising: receiving corresponding sequences of multivariate data for a plurality of previously occurring flights; parsing the corresponding sequences into cruise phases of each of the plurality of previously occurring flights; discretizing the multivariate data at least based on tailwind and an amount of fuel burn for each cruise phase; processing each corresponding sequence to develop a hidden state, which minimizes an overall residual for replicating the amount of fuel burn in each corresponding sequence; exposing at least a portion of the hidden state.

Example 19. The method of example 18, further comprising: adjusting each corresponding sequence to provide a common cruise length for each cruise phase.

Example 20. The method of example 18 or 19, further comprising: training two or more machines to predict fuel burn for the aircraft over each cruise phase; evaluating training results for each of the two or more machines; and adjusting hyperparameters for at least one machine based on the training results.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A method (800) for selecting a cruise phase route for an aircraft, comprising:

   receiving (810) sequences of multivariate flight data (630) from at least one prior flight;
   receiving (820) a set of candidate cruise phase routes (634);
   receiving (830) upcoming atmospheric conditions (636) including at least upcoming tail winds for each of the set of candidate cruise phase routes (634);
   for each (840) candidate cruise phase route (634),

      predicting (850) a sequence of fuel burn quantities based on at least the sequences of multivariate flight data (630) and the upcoming atmospheric conditions (636); and
      summing (860) the fuel burn quantities over the candidate cruise phase route (634) to obtain an estimated fuel burn (624); and

   indicating (870) a preferred candidate cruise phase route having a lowest estimated fuel burn (624).

2. The method (800) of claim 1, further comprising fueling the aircraft based at least on the lowest estimated fuel burn (624).

3. The method (800) of claim 1 or 2, wherein the aircraft is at least partially autonomous, the method (800) further comprising:
controlling the aircraft to follow the preferred candidate cruise phase route.

4. The method (800) of any of claims 1 to 3, wherein each sequence of fuel burn quantities is further based on received flight parameters (632) for the aircraft.

5. The method (800) of any of claims 1 to 4, wherein the atmospheric conditions (636) further include air temperature and/or altitude.

6. The method (800) of any of claims 1 to 5, wherein the multivariate flight data (630) is discretized based on ranges of tail wind speeds.

7. The method (800) of any of claims 1 to 6, wherein a length of one or more cruise phases included in the multivariate flight data (630) is adjusted to a common cruise phase length.

8. The method (800) of any of claims 1 to 7, wherein two or more candidate cruise phase routes (634) include one or more overlapping segments.

9. The method (800) of any of claims 1 to 8, wherein predicting the sequence of fuel burn quantities is further based on a hidden state of a trained machine (600), wherein for each of a pre-selected series of prior flights, a corresponding sequence of multivariate flight data (630) recorded during the prior flight is processed in a trainable machine (500) to develop the hidden state, which minimizes an overall residual for replicating the fuel burn quantities in each corresponding sequence.

10. A machine (600) trained to make fuel burn predictions for aircraft flight, comprising:

   an input engine (602) configured to:

      receive (810) sequences of multivariate flight data (630) from at least one prior flight;
      receive (820) a set of candidate cruise phase routes (634); and
      receive (830) upcoming atmospheric conditions (636) including at least upcoming tail winds for each of the set of candidate cruise phase routes (634);

   a prediction engine (620) configured to, for each (840) candidate cruise phase route (634), predict (850) a sequence of fuel burn quantities based on at least the sequences of multivariate flight data (630) and the upcoming atmospheric conditions (636);
   a summation engine (622) configured to sum (860) the fuel burn quantities over each candidate cruise phase route (634) to obtain an estimated fuel burn (624); and
   an output engine (606) configured to indicate (870) a preferred candidate cruise phase route having a lowest estimated fuel burn (624).

11. The machine (600) of claim 10, wherein the input engine (602) is further configured to receive flight parameters (632) for an aircraft, and wherein each sequence of fuel burn quantities is further based on the received flight parameters (632) for the aircraft.

12. The machine (600) of claim 10 or 11, wherein the multivariate flight data (630) is discretized based on ranges of tail wind speeds.

13. The machine (600) of any of claims 10 to 12, further comprising an adjustment engine (610) configured to adjust a length of one or more cruise phases included in the multivariate flight data (630) to a common cruise phase length.

14. The machine (600) of any of claims 10 to 13, further comprising a trained encoder (612) arranged logically upstream of a trained decoder (614), wherein the encoder (612) is trained to emit a vector that featurizes an input sequence of multivariate flight data (630), and wherein the decoder (614) is trained to replicate the fuel burn quantities of the input sequence based on the vector, thereby generating an output sequence.

15. A method (700) of training a machine (500) to predict fuel burn for an aircraft over a cruise phase of a flight, comprising:

receiving (710) corresponding sequences of multivariate data (630) for a plurality of previously occurring flights;
parsing (720) the corresponding sequences into cruise phases of each of the plurality of previously occurring flights;

discretizing (740) the multivariate data (630) at least based on tailwind and an amount of fuel burn for each cruise phase;
processing (750) each corresponding sequence to develop a hidden state, which minimizes an overall residual for replicating the amount of fuel burn in each corresponding sequence;
exposing (760) at least a portion of the hidden state.

FIG. 1

FIG. 2

FIG. 3

EP 4 557 261 A1

FIG. 4

INPUT ENGINE 502

ADJUSTMENT ENGINE 510

TRAINING ENGINE 504

| 512 | → | 514 | → | 516 | | 518 |

TRAINABLE MODEL 508

OUTPUT ENGINE 506

TRAINABLE MACHINE 500

# FIG. 5

ATMOSPHERIC CONDITIONS 636

CANDIDATE ROUTES 634

FLIGHT PARAMETERS 632

MULTIVARIATE FLIGHT DATA 630

INPUT ENGINE 602

ADJUSTMENT ENGINE 610

612 → 614 → 616    618

PREDICTION ENGINE 620

TRAINED MODEL 608

SUMMATION ENGINE 622

OUTPUT ENGINE 606

TRAINED MACHINE 600

FUEL BURN PER CANDIDATE ROUTE 624

# FIG. 6

700

710

RECEIVE CORRESPONDING SEQUENCES OF
MULTIVARIATE DATA FOR A PLURALITY OF PREVIOUSLY
OCCURRING FLIGHTS

720

PARSE THE CORRESPONDING SEQUENCES INTO
CRUISE PHASES OF EACH OF THE PLURALITY OF
FLIGHTS

730

ADJUST EACH CORRESPONDING SEQUENCE TO
PROVIDE A COMMON CRUISE LENGTH FOR EACH
CRUISE PHASE

740

DISCRETIZE THE MULTIVARIATE DATA AT LEAST BASED
ON TAILWIND AND AN AMOUNT OF FUEL BURN FOR
EACH CRUISE PHASE

750

PROCESS EACH CORRESPONDING SEQUENCE TO
DEVELOP A HIDDEN STATE, WHICH MINIMIZES AN
OVERALL RESIDUAL FOR REPLICATING THE FUEL BURN
QUANTITIES IN EACH CORRESPONDING SEQUENCE

760

EXPOSE AT LEAST A PORTION OF THE HIDDEN STATE

FIG. 7

800

810

RECEIVE SEQUENCES OF MULTIVARIATE FLIGHT
DATA FROM AT LEAST ONE PRIOR FLIGHT

820

RECEIVE A SET OF CANDIDATE CRUISE PHASE
ROUTES

830

RECEIVE UPCOMING ATMOSPHERIC CONDITIONS
INCLUDING AT LEAST TAIL WINDS FOR EACH OF THE
SET OF CANDIDATE CRUISE PHASE ROUTES

840

FOR EACH CANDIDATE CRUISE PHASE ROUTE:

850

PREDICT A SEQUENCE OF FUEL BURN QUANTITIES
BASED ON AT LEAST THE SEQUENCES OF
MULTIVARIATE FLIGHT DATA AND THE UPCOMING
ATMOSPHERIC DATA

860

SUM THE FUEL BURN QUANTITIES OVER THE
CANDIDATE CRUISE PHASE ROUTE TO OBTAIN AN
ESTIMATED FUEL BURN

870

INDICATE A PREFERRED CANDIDATE CRUISE PHASE
ROUTE HAVING A LOWEST ESTIMATED FUEL BURN

FIG. 8

COMPUTING SYSTEM

LOGIC MACHINE
910

STORAGE MACHINE
920

DISPLAY SUBSYSTEM
930

INPUT SUBSYSTEM
940

COMMUNICATION
SUBSYSTEM 950

900

FIG. 9

## EUROPEAN SEARCH REPORT

**Application Number**

EP 24 21 0595

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2013/046422 A1 (CABOS RALF [SG])<br>21 February 2013 (2013-02-21)<br>* paragraph [0002] *<br>* paragraph [0006] *<br>* paragraph [0012] *<br>* paragraph [0015] *<br>* paragraph [0025] *<br>* paragraph [0035] *<br>* paragraph [0060] - paragraph [0061] *<br>* paragraph [0065] *<br>* paragraph [0083] *<br>* paragraph [0090] *<br>* paragraph [0095] *<br>* paragraph [0098] *<br>* paragraph [0147] *<br>* claims 1, 2 *<br>* figures 3, 5 * | 1,2,4-7,<br>9-15<br><br>3,8 | INV.<br>G08G5/21<br>G06N3/08<br>G08G5/32<br>G08G5/53<br>G08G5/55<br>G08G5/76 |
| X<br><br>Y | WO 2008/096376 A1 (MARORKA [IS];<br>THORSTEINSSON JON AGUST [IS] ET AL.)<br>14 August 2008 (2008-08-14)<br>* page 11, line 37 - page 12, line 4 *<br>* page 12, line 19 - line 21 *<br>* page 14, line 28 - line 34 *<br>* page 15, line 4 - line 7 *<br>* claims 1, 2, 11, 12 *<br>* figure 6 * | 1,3,8,<br>10,15<br><br>3,8 | |
| X | US 9 208 457 B2 (AGRAWAL RAJAT [US];<br>PETRIE JR ROBERT A [US] ET AL.)<br>8 December 2015 (2015-12-08)<br>* claims 1, 2, 4 * | 1,10,15 | TECHNICAL FIELDS SEARCHED (IPC)<br><br>G08G<br>G06N<br>G05D |

The present search report has been drawn up for all claims

| Place of search | Date of completion of the search | Examiner |
|---|---|---|
| The Hague | 10 April 2025 | Renaudie, Cécile |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................
& : member of the same patent family, corresponding
    document

EPO FORM 1503 03.82 (P04C01)

ANNEX TO THE EUROPEAN SEARCH REPORT
ON EUROPEAN PATENT APPLICATION NO.

EP 24 21 0595

This annex lists the patent family members relating to the patent documents cited in  the above-mentioned European search report.
The members are as contained in the European Patent Office EDP file on
The European Patent Office is in no way liable for these particulars which are merely given for the purpose of information.

10-04-2025

| Patent document cited in search report | Publication date | Patent family member(s) | | Publication date |
|---|---|---|---|---|
| US 2013046422 A1 | 21-02-2013 | EP | 2559018 A2 | 20-02-2013 |
| | | SG | 184545 A1 | 29-11-2012 |
| | | US | 2013046422 A1 | 21-02-2013 |
| | | WO | 2011128836 A2 | 20-10-2011 |
| WO 2008096376 A1 | 14-08-2008 | NONE | | |
| US 9208457 B2 | 08-12-2015 | CN | 103680214 A | 26-03-2014 |
| | | EP | 2711913 A2 | 26-03-2014 |
| | | US | 2014081569 A1 | 20-03-2014 |

EPO FORM P0459

For more details about this annex : see Official Journal of the European Patent Office, No. 12/82